# FASCICULE DE BREVET EUROPEEN

(11) **EP 2 120 438 B1**
(45) Date de publication et mention de la délivrance du brevet: **31.10.2012**
(21) Numéro de dépôt: 09160170.8
(22) Date de dépôt: 13.05.2009
(51) Int. Cl.: H04M 3/487, H04M 3/428

(54) **Procédé de transmission de données et système de communication correspondant**
Verfahren zur Datenübertragung und entsprechendes Kommunikationssystem
Method for data transmission and corresponding communication system

(30) Priorité: 16.05.2008 FR 0853207
(43) Date de publication de la demande: 18.11.2009
(73) Titulaire: France Télécom, 75015 Paris (FR)
(72) Inventeur: Trovel, Nelly, 22560, TREBEURDEN (FR); Bouvet, Bertrand, 22700, PERROS-GUIREC (FR)

(56) Documents cités:
- EP-A- 1 890 472
- WO-A-2008/036008
- GB-A- 2 420 246
- GB-A- 2 432 744
- US-A1- 2002 181 672
- US-A1- 2004 218 743

## Description

La présente invention se rapporte de manière générale au domaine des télécommunications, et plus précisément elle concerne la gestion des appels entrants, c'est-à-dire la gestion des appels lorsque l'on se place du point de vue d'un utilisateur recevant des appels.

Lorsqu'un utilisateur d'un téléphone fixe ou mobile reçoit un appel d'un correspondant appelant, et qu'il ne souhaite pas répondre à cet appel, l'appel est le plus souvent transféré sur la messagerie vocale de l'utilisateur. Cependant le message d'absence de l'utilisateur sur cette messagerie vocale est le même pour tous les appels à destination de l'utilisateur, ou ne varie qu'en fonction du type de renvoi à la messagerie vocale (sur non réponse ou sur occupation par exemple), et n'est donc pas toujours adapté au contexte de l'appel. Par exemple si l'utilisateur est en litige avec ce correspondant, il n'a pas la possibilité de laisser un message à son correspondant pour lui dire de s'adresser à son avocat sans décrocher son téléphone.

De même lorsque l'utilisateur ne souhaite pas répondre tout de suite à un appel d'un correspondant appelant, mais souhaite le faire patienter avant de prendre l'appel, par exemple parce qu'il est déjà en communication avec une première personne, il n'a pas la possibilité d'avertir son correspondant par un message vocal approprié en fonction du contexte, sans réellement prendre l'appel et le lui dire de vive voix. Or cette dernière solution n'est pas toujours souhaitable, par exemple parce-que l'utilisateur ne peut se permettre de faire attendre la première personne avec laquelle il est déjà en communication.

La demande US20060147021 tente de résoudre ce problème, en envoyant au correspondant appelant une tonalité de retour d'appel qui est fonction de l'état d'humeur de l'utilisateur, que celui-ci a mis à jour dans son profil. Cet état d'humeur est paramétrable en fonction de l'identité du correspondant appelant ou du calendrier de l'utilisateur. Cependant cette solution exige que cet état d'humeur soit mis à jour le plus régulièrement possible par l'utilisateur dans son profil, ce qui est très contraignant. De plus cette configuration de la tonalité de retour d'appel ne permet pas de fournir au correspondant appelant un message vocal adapté dans un contexte d'appel non prévu à l'avance par l'utilisateur.

La demande de brevet EP1890472 divulgue un procédé permettant à un utilisateur recevant un appel de configurer en temps réel un film sonore à jouer à l'appelant, par exemple avant de prendre cet appel. Pour cela le terminal de l'utilisateur envoie un identifiant de film sonore, qui peut correspondre à l'appui sur une touche du terminal par l'utilisateur. Le procédé est utilisable lors d'un premier appel entrant, ou en situation de double appel.

L'invention propose une solution qui ne présente pas les inconvénients de la technique antérieure en fournissant un procédé et un système de gestion d'un appel entrant depuis un correspondant appelant vers un utilisateur, qui permettent à celui-ci de sélectionner dynamiquement un message à destination du correspondant appelant. Ainsi le correspondant appelant reçoit le message, par exemple un message vidéo ou un message sonore, le plus approprié possible au contexte de l'appel du point de vue de l'utilisateur.

A cette fin, l'invention propose un procédé de transmission de données incluant une étape de demande de mise en relation d'un dispositif appelant avec un dispositif appelé et une étape de notification de ladite demande à un utilisateur du dispositif appelé, procédé caractérisé en qu'il inclut en outre une étape de détermination d'un contenu d'un message à transmettre au dispositif appelant en fonction d'au moins une instruction émise par l'utilisateur du dispositif appelé.

L'utilisateur choisissant lui-même le message qui doit être transmis au correspondant appelant, il fournit à celui-ci un message adapté à la situation de l'utilisateur. Par exemple ce message est un message vocal disant "je suis en réunion, rappelle-moi plus tard". L'invention permet donc à l'utilisateur de fournir à son correspondant une explication adaptée à son refus de prendre l'appel, dans une situation qu'il n'avait pas prévue à l'avance. Si au contraire l'utilisateur souhaite seulement faire patienter son correspondant avant de prendre l'appel, le message est par exemple une musique d'attente, ou un message vocal disant "je suis déjà en communication, mais je vais prendre ton appel très bientôt".

Selon une caractéristique avantageuse du procédé de gestion d'un appel entrant selon l'invention, ladite instruction comporte un choix de message sonore à transmettre au dispositif appelant, et une indication de durée destinée à incrémenter la durée de ladite mise en relation.

Cette caractéristique permet à l'utilisateur d'incrémenter la durée de transmission du message sonore, par exemple en ajoutant des sonneries à la fin du message sonore. Autrement dit, ladite instruction permet de modifier le temporisateur de mise en attente de l'appelant. Ainsi, si l'utilisateur a besoin de deux minutes avant de répondre à un appel et qu'il sait que le message sonore qu'il fait transmettre au correspondant appelant est beaucoup plus court, il fait ajouter deux minutes de sonneries à la fin du message sonore, à destination du correspondant appelant.

Selon une autre caractéristique avantageuse du procédé de transmission de données selon l'invention, ladite instruction est transmise *via* le dispositif appelé en utilisant une tonalité de type DTMF (d'après l'anglais "Dual Tone Multi Frequency").

Selon cette caractéristique, il suffit à l'utilisateur recevant un appel d'appuyer sur une ou plusieurs touches du dispositif appelé, pour indiquer au réseau de communication quel message sonore transmettre au correspondant appelant. L'utilisation des DTMF pour l'envoi de l'instruction de l'utilisateur au réseau de communication a l'avantage d'être très rapide. Notamment elle ne nécessite pas l'ouverture d'une session de communication spécifique entre l'utilisateur et le serveur d'application. De plus ce choix d'utiliser des DTMF a l'avantage de fonctionner avec tous les terminaux.

Selon une autre caractéristique avantageuse du procédé de transmission de données selon l'invention, ladite étape de détermination n'est exécutée que lorsque ledit dispositif appelé est déjà en communication avec un dispositif tiers distinct du dispositif appelant.

Selon cette caractéristique, l'utilisateur n'a la possibilité de choisir un message sonore à destination du correspondant appelant que s'il est déjà en communication avec une autre personne. Cette caractéristique permet à l'invention d'être utilisable sur un terminal téléphonique classique qui verrouille son clavier à l'arrivée d'un appel entrant, de manière à ce que seule la touche du clavier permettant la prise de cet appel soit active. En effet, la plupart des téléphones permettent d'envoyer des DMTF lorsqu'un appel est en cours, mais pas lorsqu'ils sonnent suite à la réception d'une demande d'établissement d'appel.

L'invention concerne aussi un système de communication dans un réseau de communication, comportant un serveur de messages sonores et un serveur d'application, ledit serveur d'application comportant:
- des moyens de réception d'une demande d'établissement d'appel correspondant à un appel entrant depuis un premier dispositif de communication vers un deuxième dispositif de communication d'un utilisateur,
- des moyens de mise en relation dudit premier dispositif de communication avec ledit serveur de messages sonores,
- et des moyens de notification dudit appel entrant audit utilisateur,
et ledit serveur de messages sonores comportant des moyens de transmission d'un message sonore audit premier dispositif de communication,
ledit système de communication étant **caractérisé en ce que** ledit serveur d'application comporte en outre des moyens de réception d'une instruction dudit utilisateur conditionnant le contenu dudit message sonore.

L'invention concerne enfin un programme d'ordinateur comportant des instructions pour mettre en oeuvre le procédé de transmission de données selon l'invention, lorsqu'il est exécuté sur un ordinateur.

Le système de communication et le programme d'ordinateur selon l'invention présentent des avantages analogues à ceux du procédé de transmission de données selon l'invention.

D'autres caractéristiques et avantages apparaîtront à la lecture d'un mode de réalisation préféré décrit en référence aux figures dans lesquelles :
- la figure 1 représente un système de communication dans lequel est implémenté le procédé de transmission de données selon l'invention,
- la figure 2 représente des étapes du procédé de transmission de données selon l'invention,
- la figure 3 représente la première partie d'un diagramme de flux illustrant un exemple de fonctionnement de l'invention,
- et la figure 4 représente la deuxième partie de ce diagramme de flux.

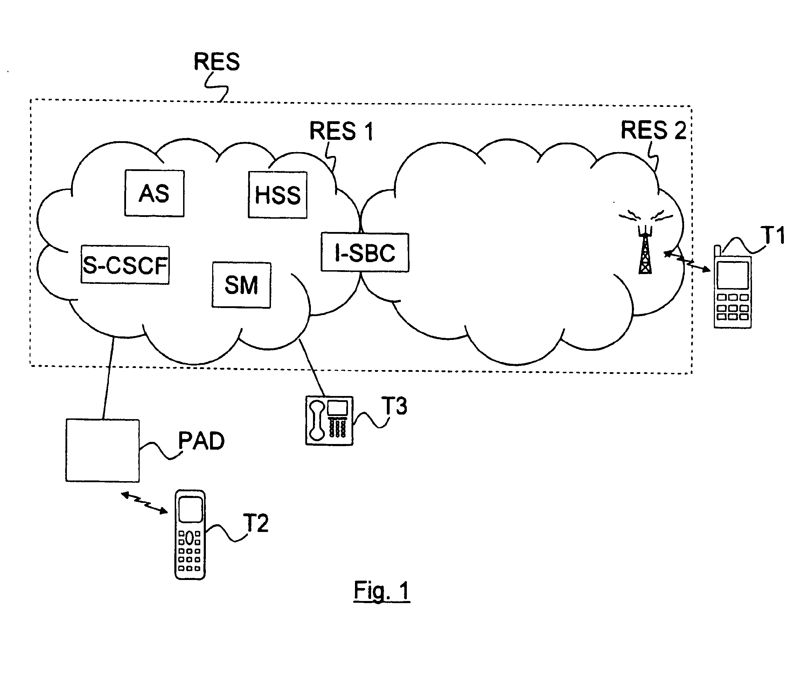

Selon un mode de réalisation préféré de l'invention représenté à la **figure 1**, le procédé de transmission de données selon l'invention est plus précisément un procédé de gestion d'un appel entrant, implémenté de manière logicielle et/ou matérielle dans un système de communication comportant un serveur d'application AS et un serveur SM de messages sonores, ce système faisant lui-même partie d'un réseau de communication de voix sur IP (d'après l'anglais "Internet Protocol") RES1. Dans ce mode de réalisation de l'invention, le serveur d'application AS et le serveur SM sont des entités physiques distinctes du réseau de communication RES1. Cependant d'autres implémentations de l'invention sont bien entendu envisageables. Par exemple en variante le serveur d'application AS et le serveur SM sont des entités fonctionnelles d'une même entité physique du réseau de communication RES1.

De plus dans ce mode de réalisation, l'invention est implémentée dans un réseau de communication RES1 utilisant une architecture IMS (d'après l'anglais "IP Multimedia Subsystem" du groupe de normalisation 3GPP pour l'anglais "3rd Generation Partnership Project") et des mécanismes de contrôle d'appel liés à cette architecture IMS. Cependant l'Homme du métier saura aisément transposer cette implémentation de l'invention dans d'autres réseaux de communication tels qu'un réseau de communication RTC ("Réseau Téléphonique Commuté") ou un réseau de communication mobile de deuxième génération utilisant des mécanismes de réseau intelligent similaires. De même l'invention n'est pas limitée à la gestion des appels entrants, étant facilement transposables aux sessions de données mutlimédia par exemple.

Le serveur d'application AS est en effet un serveur hébergeant la logique de service associée à l'invention, et correspond à la fonction SCF (d'après l'anglais "Service Control Function") dans un réseau intelligent classique. Les utilisateurs bénéficiant du procédé de gestion d'un appel entrant selon l'invention sont abonnés auprès de l'opérateur du réseau de communication RES1. Ils ont à ce titre, dans leurs profils de service ASSI (d'après l'anglais "Application Server Subscription Information") hébergés dans une base de données HSS (d'après l'anglais "Home Subscriber Server"), des critères de filtrage indiquant que le serveur d'application doit être contacté par le réseau de communication RES1 pour mettre en oeuvre le procédé de gestion d'un appel entrant selon l'invention, dans certaines conditions. De plus, ces abonnés ont préalablement configuré dans le serveur SM de messages sonores plusieurs choix de messages sonores à transmettre à un correspondant appelant lorsqu'ils sont déjà en conversation téléphonique avec un autre interlocuteur, ces choix correspondant chacun à un code DTMF ou à une combinaison de codes DTMF.

Ainsi, dans ce mode de réalisation de l'invention, on suppose qu'un utilisateur d'un terminal T2, représenté à la **figure 1****,** bénéficiant du procédé de gestion d'un appel selon l'invention, est en communication téléphonique sur son terminal T2 avec un interlocuteur utilisant un terminal T3. Lors de cette communication téléphonique, l'utilisateur du terminal T2 est appelé sur son terminal T2, par un correspondant appelant d'un terminal T1. Le terminal T2 est dans cet exemple de réalisation de l'invention, un téléphone sans fil relié à une base DECT (d'après l'anglais "Digital Enhanced Cordless Telecommunications"), connectée par un port USB (d'après l'anglais "Universal Serial Bus") à une passerelle domestique PAD, reliée par ADSL (d'après l'anglais "Asymmetrical Digital Subscriber Line") au réseau de télécommunication de voix sur IP RES1. De même le terminal T1 est par exemple un téléphone mobile relié à un réseau de communication mobile RES2 par la technologie UMTS (d'après l'anglais "Universal Mobile Telecommunications System"), tandis que le terminal T3 est un téléphone sur IP connecté par liaison filaire au réseau de communication RES1. On suppose que le réseau de communication RES2 est également un réseau avec une architecture IMS, le terminal T1 étant un terminal avec une pile SIP (d'après l'anglais "Session Initiation Protocol") demandant l'établissement d'un appel voix sur IP avec le terminal T2. L'interconnexion entre les réseaux de communication RES1 et RES2 est réalisée pour les appels voix sur IP par un serveur I-SBC (d'après l'anglais "Interconnection - Session Border Controller"). L'ensemble des réseaux RES1 et RES2 forme un réseau de communication RES.

Il est à noter que les exemples de dispositifs de communication T1, T2 et T3 ne sont pas limitatifs. Par exemple le terminal T2 est en variante un ordinateur personnel fixe ou portable. De plus en fonction du type de réseau de communication dans lequel est implémenté l'invention, les terminaux T1, T2 et T3 sont par exemple des terminaux fixes ou mobiles de deuxième génération.

On suppose également que préalablement à cet appel entrant, le terminal T2 s'est enregistré sur le réseau RES1. Lors de cet enregistrement, les critères de filtrage du profil ASSI de l'utilisateur hébergé dans la base de données HSS, ont été téléchargés dans un serveur S-CSCF (d'après l'anglais "Serving Call State Control Function"), passage obligé dans le réseau RES1 pour les messages en provenance du terminal T2. Ces critères de filtrage indiquent au serveur S-CSCF que sur réception d'un message "SIP (d'après l'anglais "Session Initiation Protocol") Invite" correspondant à une demande d'établissement d'appel vers l'utilisateur, le serveur S-CSCF doit insérer le serveur d'application AS dans la signalisation liée à cet appel. Ces critères de filtrage pour mettre en oeuvre le procédé de gestion d'appel selon l'invention sont par exemple configurés comme suit:
IFC (d'après l'anglais "Initial Filtering Criteria") :
   - Adresse du serveur d'application AS= sip : cw@orange.fr
   - priorité = 1
   - point de déclenchement = [(méthode initiale = INVITE) ET (direction de la requête = MT (d'après l'anglais "Mobile Terminating"))] avec comportement par défaut = "continue".

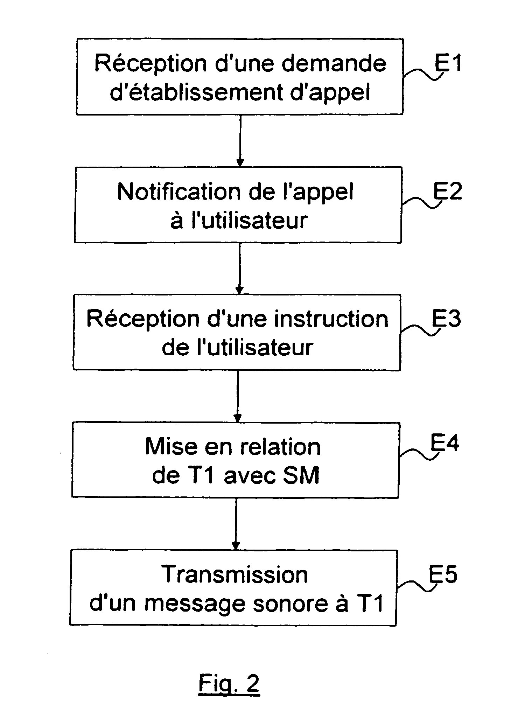

Le procédé de gestion d'un appel entrant selon l'invention est maintenant décrit en prenant pour exemple l'appel entrant du correspondant appelant du terminal T1 vers le terminal T2 de l'utilisateur. Le procédé selon l'invention comporte des étapes E1 à E5 représentées à la **figure 2****.**

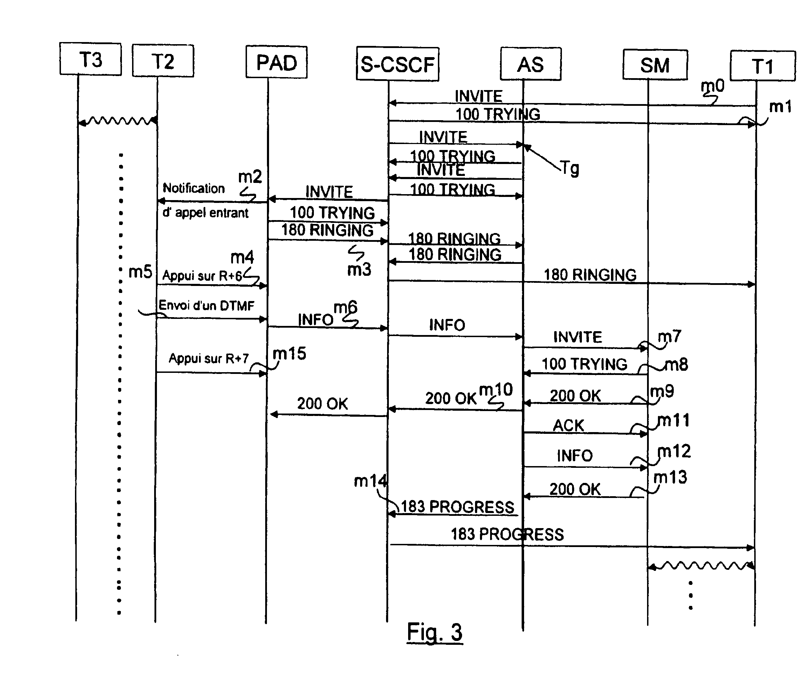

L'étape E1 est la réception par le serveur d'application AS d'une demande d'établissement d'appel en provenance du terminal T1. Plus précisément, comme représenté à la **figure 3****,** le terminal T1 ayant envoyé un message m0 "SIP Invite", correspondant à une demande d'établissement d'appel avec le terminal T2, au serveur S-CSCF du terminal T2, le serveur S-CSCF déclenche la logique de service liée au procédé de gestion d'un appel entrant dans le serveur d'application AS. En effet ce message m0 correspond aux critères de filtrage dans le profil de service de l'utilisateur, préalablement téléchargé dans le serveur S-CSCF, comme expliqué plus haut. Lorsque le serveur S-CSCF reçoit le message m0, il le transmet donc au serveur d'application AS, après avoir envoyé un message m1 "SIP 100 Trying" au terminal T1, pour indiquer à celui-ci la bonne réception du message précédent m0.

A la réception du message "SIP Invite" dans le serveur d'application AS, celui-ci répond au serveur S-CSCF par un message "SIP 100 Trying", puis vérifie le nombre d'appels en cours pour l'utilisateur du terminal T2, le service lié au procédé de gestion d'appel entrant selon l'invention n'étant déclenché par le serveur d'application AS que si l'utilisateur a déjà une communication en cours. Ce critère étant ici vérifié, dans cette étape E1 la réception de ce message "SIP Invite" au niveau du serveur d'application AS arme un temporisateur Tg, correspondant au temporisateur du service appelé communément "call waiting", dont la durée est fixée à une valeur prédéterminée correspondant par exemple à la durée de transmission d'une annonce vocale par défaut au terminal T1. A l'expiration de ce temporisateur, si l'utilisateur du terminal T2 n'a toujours pas pris l'appel du correspondant appelant du terminal T1, le serveur d'application interrompt l'établissement d'appel, en envoyant un message "SIP CANCEL" au terminal T1.

L'étape suivante E2 est la notification de l'appel entrant à l'utilisateur du terminal T2. Pour cela le serveur d'application AS transmet le message "SIP Invite" précédemment reçu, inchangé par rapport au message m0, au serveur S-CSCF. A la réception de ce message "SIP Invite", le serveur S-CSCF envoie un message "SIP 100 Trying " au serveur d'application AS pour lui indiquer cette bonne réception, puis transfère le message "SIP Invite" à la passerelle domestique PAD à laquelle est connecté le terminal T2. A la réception de ce message "SIP Invite", la passerelle domestique PAD envoie un message "SIP 100 Trying" au serveur S-CSCF puis traite ce message d'établissement d'appel classiquement: l'utilisateur étant déjà en communication, la passerelle domestique PAD envoie un message m2 utilisant le protocole V.23 (protocole défini par le CCITT ("Comité Consultatif International du Télégraphe et Téléphone")) au terminal T2. Le terminal T2 émet alors un bip de double appel pour notifier l'utilisateur qu'un correspondant cherche à le joindre, et affiche l'identité du correspondant appelant sur le terminal T2 si cette identité est disponible dans le message m2. De plus dans cette étape E2, après l'envoi du message m2, la passerelle domestique PAD envoie un message m3 "SIP Ringing" au serveur S-CSCF, indiquant que le terminal T2 a alerté l'utilisateur de la demande d'établissement d'appel. Ce message m3 est envoyé par le S-CSCF au serveur d'application, qui le retransmet inchangé au serveur S-CSCF, qui le transmet enfin au terminal T1. Ce message m3 permet de jouer au correspondant appelant du terminal T1 un retour de sonnerie classique jusqu'à ce que l'utilisateur ait choisi un message sonore à lui transmettre, ou jusqu'à ce que l'utilisateur prenne l'appel, si l'utilisateur choisit de prendre directement l'appel en appuyant sur les touches "R" puis "1" ou "R" puis "2" du terminal T2. Il est à noter que le serveur d'application étant en coupure des flux de signalisation, le message m0 précédent ayant déclenché la logique de service implémentée dans le serveur d'application AS, le serveur d'application a également la possibilité de faire jouer une autre sonnerie de retour d'appel par défaut, en attendant que l'utilisateur choisisse un message sonore à transmettre à son correspondant appelant.

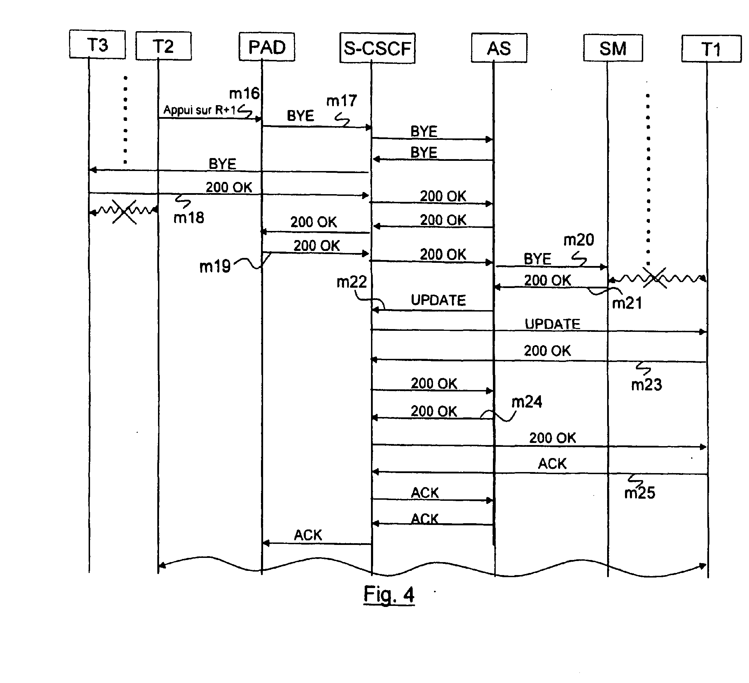

Il est de plus à noter que dans les diagrammes de flux des **figures 3** **et** **4****,** dans un souci de clarté, tous les serveurs du réseau de communication RES1 par lesquels passent les flux de données correspondant à l'appel entrant ne sont pas représentés. Notamment le serveur I-CSCF (Interrogating - Call Session Control Function), et le serveur P-CSCF (Proxy - Call Session Control Function) qui est en coupure de ces flux n'est pas représenté.

L'étape suivante E3 est la réception par le serveur d'application AS, d'une instruction de l'utilisateur. Dans cette étape, l'utilisateur du terminal T2 ayant été averti d'une demande d'établissement d'appel de la part du correspondant appelant, souhaite lui envoyer un message vocal lui demandant de patienter deux minutes, afin que l'utilisateur puisse terminer une conversation téléphonique en cours.

Pour cela l'utilisateur appuie sur la touche "R" puis sur la touche "6" de son terminal T2, qui envoie alors un message m4 correspondant à cette combinaison de touches à la passerelle domestique PAD. Cette combinaison de touches permet à l'utilisateur d'indiquer à la passerelle domestique PAD qu'il souhaite envoyer une ou plusieurs tonalités DTMF au serveur d'application en relation avec la demande d'établissement d'appel dont il vient d'être averti. Sur réception du message m4, la passerelle domestique PAD attend donc la réception d'une tonalité DTMF correspondant au message m5 sur la **figure 3**, émise par l'utilisateur par appui sur une touche de son terminal T2.

Dans cet exemple d'utilisation de l'invention, on suppose que l'utilisateur du terminal T2 envoie un DMTF à la passerelle domestique PAD. Ce DTMF correspond à un choix de message sonore pour le correspondant appelant. Ainsi par exemple l'utilisateur a le choix entre:
- appuyer sur la touche "1" pour envoyer au correspondant le message vocal suivant: "Je suis en réunion, rappelle-moi plus tard",
- appuyer sur la touche "2" pour envoyer une musique d'attente au correspondant,
- appuyer sur la touche "3" pour envoyer au correspondant le message vocal suivant: "Je suis en communication, je prends ton appel dans deux minutes",
- appuyer sur la touche "4" pour envoyer au correspondant le message vocal suivant: "Je suis indisponible pour le moment, je vous rappellerai ultérieurement",
- appuyer sur la touche "5" pour ajouter dix sonneries à la fin du message sonore correspondant à la touche 3,
- appuyer sur la touche "6" pour ajouter vingt sonneries à la fin du message sonore correspondant à la touche 3.

Dans cet exemple d'utilisation de l'invention, l'utilisateur envoie un DTMF correspondant à un appui sur la touche "3" du terminal T2, à la passerelle domestique.

Dans cette étape E3, à la réception du DTMF correspondant au message m5, la passerelle domestique PAD envoie un message m6 "SIP INFO" comportant le code DTMF correspondant au numéro de la touche appuyée par l'utilisateur, au serveur S-CSCF, qui le transfère au serveur d'application AS. A la réception de ce code DTMF dans ce message "SIP INFO" par le serveur d'application AS, en fonction de la durée du message sonore correspondant, le serveur d'application incrémente éventuellement son temporisateur Tg, afin que celui n'expire qu'après la transmission de ce message sonore. Il est à noter que le serveur d'application AS lie ce message "SIP INFO" au message "SIP Invite" précédemment reçu grâce à un même identifiant de session inclus dans ces deux messages. En effet ces deux messages appartiennent au même "dialogue" SIP", et le S-CSCF conserve pour chaque dialogue SIP un contexte d'appel. Le S-CSCF ayant déjà détecté que les messages concernant ce dialogue SIP devaient être transférés au serveur d'application AS, celui-ci est mis en coupure de ces messages.

Après l'envoi du DTMF correspondant au message m5 par l'utilisateur, celui-ci appuie sur les touches "R" puis "7" de son terminal T2, qui en notifie la passerelle domestique PAD par un message m15. Ce message m15 permet à la passerelle domestique d'associer d'éventuels autres codes DTMF en provenance du terminal T2 avec la conversation téléphonique en cours entre le terminal T2 et le terminal T3.

Il est à noter que dans ce mode de réalisation de l'invention, la passerelle domestique PAD a une implémentation spécifique permettant d'associer, sur réception de combinaisons de touches "R" puis "6" ou "R" puis "7", la réception d'une tonalité DTMF du terminal T2 à l'appel en cours ou à la demande d'établissement d'appel survenant lors de cet appel en cours. En variante, la passerelle domestique réalise automatiquement cette association dès que la réception d'une tonalité DTMF survient dans un délai très court après la notification d'une demande d'établissement d'appel à l'utilisateur. D'autres variantes d'implémentation de l'étape E3 sont également envisageables. Par exemple en variante, pour ajouter des sonneries à la fin du message sonore envoyé au correspondant, l'utilisateur appuie sur une touche pour le choix du message sonore, puis sur une autre touche pour le choix du nombre de sonneries à ajouter au message sonore précédemment choisi, plutôt que d'appuyer sur une seule touche comme dans la variante principale de l'invention. Dans ce cas, après réception d'une première tonalité DTMF, la passerelle domestique PAD attend un court délai la réception d'une éventuelle deuxième tonalité DTMF avant d'envoyer le message m6 "SIP INFO" comportant le ou les codes DTMF correspondants, au serveur S-CSCF. De plus, en variante d'autres touches permettent à l'utilisateur de demander au serveur d'application de jouer un message vocal en boucle, ou d'ajouter un nombre de sonneries prédéterminé en début de message vocal, ou encore d'ajouter un nombre de sonneries indéterminé, c'est-à-dire jusqu'à la prise d'appel de l'utilisateur ou raccrochage de l'utilisateur ou du correspondant appelant, à la fin d'un message vocal.

L'étape suivante E4 est la mise en relation par le serveur d'application AS, du serveur de messages sonores SM avec le terminal T1. Pour cela, à la réception du message m6 "SIP INFO", le serveur d'application AS envoie au serveur de messages sonores SM un message m7 "SIP Invite" comportant les paramètres SDP (d'après l'anglais "Session Data Protocol") nécessaires au serveur de messages sonores pour communiquer avec le terminal T1, reçus précédemment grâce au premier message m0 envoyé par celui-ci. Ce message m7 "SIP Invite" comporte notamment l'adresse IP du terminal T1, les codecs que celui-ci supporte, et un numéro de port à utiliser pour communiquer avec le terminal T1. A la réception du message m7 "SIP Invite", le serveur SM de messages sonores répond au serveur d'application AS par un message m8 " SIP 100 Trying", puis accepte la demande de mise en relation avec le terminal T1 par un message m9 "SIP 200 OK" contenant les paramètres SDP du serveur SM de messages sonores.

Puis le serveur d'application AS envoie un message m10 "SIP 200 OK" au serveur S-CSCF, correspondant à un acquittement positif du message m6 "SIP INFO" précédemment reçu de celui-ci. A la réception du message m10 "SIP 200 OK", le serveur S-CSCF le transfère à la passerelle domestique PAD. De plus le serveur d'application AS acquitte le message m9 "SIP 200 OK" par un message m11 "SIP ACK", qu'il envoie au serveur SM de messages sonores. Enfin le serveur d'application AS transmet le choix de message sonore de l'utilisateur au serveur SM de messages sonores dans un message m12 "SIP INFO". Le serveur SM acquitte positivement ce message m12 "SIP INFO" par un message m13 "200 OK". A la réception du message m13 "SIP 200 OK", le serveur d'application AS envoie un message m14 "SIP 183 Progress" contenant les paramètres SDP du serveur SM de messages sonores précédemment reçus dans le message m9 "SIP 200 OK", au serveur S-CSCF. Le serveur S-CSCF transmet ensuite ce message m14 au terminal T1, ce qui permet d'établir une session de communication entre le serveur SM de messages sonores et le terminal T1, en mode "early-media" de manière à ne pas facturer le correspondant appelant avant connexion effective avec l'utilisateur.

L'étape suivante E5 est la transmission par le serveur SM de messages sonores du message sonore sélectionné par l'utilisateur à l'étape E3, au terminal T1. Si l'utilisateur a appuyé à l'étape E3 sur la touche "5" ou "6", le serveur SM de messages sonores joue à la fin du message sonore, le nombre de sonneries correspondant au choix de l'utilisateur.

On suppose maintenant, dans cet exemple d'utilisation de l'invention, que l'utilisateur décide de prendre l'appel du correspondant appelant du terminal T1, avant la fin de la transmission du message sonore au terminal T1, et de libérer l'appel en cours avec le terminal T3. Pour cela il appuie sur les touches "R" puis "1" de son terminal T2, ce qui provoque l'envoi d'un message m16, représenté à la **figure 4****,** vers la passerelle domestique PAD, la notifiant de cette activation de touches de l'utilisateur. L'utilisateur a bien sûr la possibilité d'invoquer à la place les autres fonctionnalités du double appel disponibles sur son terminal T2. Par exemple en appuyant sur la touche "R" puis sur la touche "2" de son terminal T2, il a la possibilité d'accepter l'appel du correspondant appelant du terminal T1 tout en mettant en garde son interlocuteur du terminal T3.

A la réception du message m16, la passerelle domestique PAD envoie un message m17 "SIP BYE" au serveur S-CSCF, afin de libérer l'appel en cours avec le terminal T3. Le serveur S-CSCF transmet alors le message "SIP BYE" au serveur d'application AS, qui le retransmet sans modification au serveur S-CSCF, qui le transfère ensuite au terminal T3. Ce message "SIP BYE" contient un identifiant de session permettant au serveur d'application AS de lier ce message à la communication déjà en cours entre l'utilisateur et l'interlocuteur du terminal T3, communication pour laquelle le serveur d'application AS avait été précédemment notifié par le serveur S-CSCF d'une demande d'établissement d'appel correspondante. Le terminal T3 répond ensuite au serveur S-CSCF par un message m18 "SIP 200 OK" d'acquittement. A la réception du message m18 "SIP 200 OK", le serveur S-CSCF le transmet au serveur d'application AS, qui le retransmet sans modification au serveur S-CSCF, qui le transfère à la passerelle domestique PAD. L'appel entre les terminaux T3 et T2 est alors libéré, c'est-à-dire que les ressources précédemment utilisées pour cet appel sont maintenant libres.

A la réception du message m18 "SIP 200 OK", la passerelle domestique PAD établit ensuite l'appel entre le terminal T2 et le terminal T1. Pour cela, la passerelle domestique PAD envoie un message m19 "SIP 200 OK" au serveur S-CSCF, contenant les paramètres SDP du terminal T2, en réponse au message "SIP INVITE" précédemment reçu correspondant au message "SIP Invite" m0 envoyé par le terminal T1. Le serveur S-CSCF transmet alors ce message m19 "SIP 200 OK" au serveur d'application AS. A la réception du message m19 "SIP 200 OK", le serveur d'application AS interrompt la transmission du message sonore au terminal T1 pour établir l'appel entre le terminal T1 et le terminal T2. Pour cela il envoie un message m20 "SIP BYE" au serveur SM de messages sonores, qui interrompt la transmission du message sonore au terminal T1 et répond au serveur d'application AS par un message m21 "SIP 200 OK". Sur réception du message m21 "SIP 200 OK", le serveur d'application AS envoie au terminal T1 de nouveaux paramètres de session pour établir l'appel entre le terminal T1 et le terminal T2, correspondant aux paramètres SDP non plus du serveur SM de messages sonores, mais du terminal T2. Pour cela, le serveur d'application AS envoie au serveur S-CSCF un message m22 "SIP UPDATE" comportant les paramètres SDP du terminal T2, à destination du terminal T1. Le serveur S-CSCF transfère alors ce message m22 "SIP UPDATE" au terminal T1, qui accepte l'établissement de la session avec le terminal T2 en répondant par un message m23 "SIP 200 OK" au serveur S-CSCF, qui transmet ce message au serveur d'application AS. Le serveur d'application AS confirme alors l'établissement de la session en envoyant un nouveau message m24 "SIP 200 OK" contenant les paramètres SDP du terminal T2 au serveur S-CSCF, qui transfère ce message m24 "SIP 200 OK" au terminal T1. Le terminal T1 acquitte enfin ce message m24 "SIP 200 OK" par un message m25 "SIP ACK" qu'il envoie au serveur S-CSCF, qui le transmet au serveur d'application AS, qui le retransmet sans modification au serveur S-CSCF, qui le transfère à la passerelle domestique PAD. L'appel est alors établi entre les terminaux T1 et T2.

Il est à noter que plusieurs variantes de l'invention sont envisageables, non seulement en fonction de la nature du réseau de communication utilisé, fixe ou mobile par exemple, mais aussi en fonction de l'implémentation choisie pour chacune des étapes du procédé de gestion d'appel entrant selon l'invention.

Ainsi, il est possible d'envoyer l'instruction de l'utilisateur concernant le choix de message sonore à transmettre au terminal T1 par d'autres moyens qu'une tonalité DTMF. Par exemple en variante si le terminal T2 est un terminal mobile de classe A, le serveur d'application utilise une technique de "push WAP (Wireless Application Protocol)" pour envoyer une page WAP proposant plusieurs choix à l'utilisateur, l'utilisateur devant cliquer sur un de ces choix pour envoyer l'instruction au serveur d'application. De même en variante si le terminal T2 est un terminal SIP directement relié au réseau de communication RES1 sans passer par une passerelle domestique, lorsque l'utilisateur appuie sur une touche pour choisir un message sonore à transmettre, le terminal T2 envoie directement un message "SIP INFO" au serveur S-CSCF, sans utiliser de DTMF. Il est à noter que dans ce dernier cas l'utilisateur n'a pas besoin d'utiliser les combinaisons de touches spécifiques "R" puis "6" et "R" puis "7" pour lier son choix de message sonore à la demande d'établissement d'appel du terminal T1, le terminal T2 le faisant automatiquement grâce à un programme logiciel spécifique dans le terminal T2 par exemple.

De plus, dans cet exemple d'utilisation de l'invention, le procédé de gestion d'appel selon l'invention n'est déclenché que lorsque l'utilisateur est déjà en communication avec un interlocuteur. Cependant d'autres cas d'usage sont envisageables. Par exemple en variante, en configurant de manière appropriée les critères de filtrage dans le profil abonné ASSI de l'utilisateur, le procédé selon l'invention est déclenché lors de tout appel entrant, que l'utilisateur soit ou non déjà en communication. Cette variante nécessite cependant un terminal T2 capable d'envoyer des DTMF lorsque l'arrivée d'un appel entrant est notifiée à l'utilisateur. Pour cela on modifie par exemple de manière propriétaire le clavier téléphonique du terminal T2 afin que les touches autres que la touche de prise d'appel soient déverrouillées lors de l'arrivée d'un appel entrant. De plus dans cette variante le déroulement des étapes E1 à E5 est le même que celui décrit dans la variante principale de l'invention, à l'exception du fait que les messages m4 et m15 ne sont pas nécessaires lors de l'étape E3.

Enfin l'implémentation de l'invention n'est pas limitée à l'utilisation de mécanismes de type réseau intelligent. En effet la variante principale de l'invention est aisément transposable par l'Homme du métier dans une autre variante de réalisation pour laquelle les fonctionnalités du serveur d'application AS et du serveur SM de messages sonores sont implémentées dans la passerelle domestique PAD. Dans cette dernière variante, il n'est pas nécessaire de configurer des critères de filtrage au niveau du serveur S-CSCF.

## Revendications

1. Procédé de transmission de données incluant :
- une étape de demande de mise en relation d'un dispositif appelant (T1) avec un dispositif appelé (T2) et une étape de notification (E2) de ladite demande à un utilisateur du dispositif appelé (T1),
- une étape de détermination d'un contenu d'un message à transmettre au dispositif appelant (T1) en fonction d'au moins une instruction émise par l'utilisateur du dispositif appelé (T1),
**caractérisé en ce que** ladite étape de détermination n'est exécutée que lorsque ledit dispositif appelé (T2) est déjà en communication avec un dispositif (T3) tiers distinct du dispositif appelant (T1), et **en ce qu'**une dite instruction comporte une indication de durée destinée à incrémenter la durée du message à transmettre,
et **en ce qu'**il comprend une étape d'incrémentation de la durée d'un temporisateur de mise en attente du dispositif appelant en fonction de la durée du message à transmettre.

2. Procédé de transmission de données selon la revendication 1, **caractérisé en ce que** ladite instruction est transmise via le dispositif appelé (T2) en utilisant une tonalité de type DTMF.

3. Système de communication dans un réseau de communication (RES1), comportant un serveur (SM) de messages sonores et un serveur d'application (AS), ledit serveur d'application (AS) comportant:
- des moyens de réception d'une demande d'établissement d'appel correspondant à un appel entrant depuis un premier dispositif (T1) de communication vers un deuxième dispositif (T2) de communication d'un utilisateur,
- des moyens de notification dudit appel entrant audit utilisateur,
- des moyens de mise en relation dudit premier dispositif (T1) de communication avec ledit serveur (SM) de messages sonores, ledit serveur (SM) de messages sonores comportant des moyens de transmission d'un message sonore audit premier dispositif (T1) de communication,
- et des moyens de réception d'une instruction dudit utilisateur, comportant un choix de message sonore à transmettre au dispositif appelant (T1),
ledit système de communication étant **caractérisé en ce que** ledit serveur d'application (AS) comporte en outre des moyens de traitement de ladite instruction exécutés seulement lorsque ledit dispositif appelé (T2) est déjà en communication avec un dispositif (T3) tiers distinct du dispositif appelant (T1), et **en ce que** ladite instruction comporte en outre une indication de durée destinée à incrémenter la durée dudit message sonore, permettant d'incrémenter si nécessaire la durée du temporisateur du service « call waiting ».

4. Programme d'ordinateur comportant des instructions pour mettre en oeuvre le procédé selon la revendication 1 ou 2, lorsqu'il est exécuté sur un ordinateur.

## Claims

1. Data transmission method including the following stages:
- request for connection of a calling device (T1) with a called device (T2) and notification (E2) of said request to a user of the called device (T2),
- determination of a content of a message to be sent to the calling device (T1) as a function of at least one instruction issued by the user of the called device (T2),
**characterised in that** said determination stage is only executed if said called device (T2) is already connected with a third-party device (T3) other than the calling device (T1), and **in that** one such instruction includes a duration indication intended to increase the duration of the message to be sent,
and **in that** it includes a stage to increase the duration of a call waiting timer of the calling device as a function of the duration of the message to be sent.

2. Data transmission method according to Claim 1, **characterized in that** said instruction is sent via the called device (T2) using a DTMF tone.

3. Communication system in a communication network (RES1), including a voice-message server (SM) and an application server (AS), said application server (AS) including:
- means for receiving a call establishment request corresponding to an incoming call from a first communication device (T1) to a second communication device (T2) of a user,
- means for notifying said incoming call to said user,
- means for connecting said first communication device (T1) with said voice-message server (SM), said voice-message server (SM) having means for sending a voice message to said first communication device (T1),
- and means for receiving an instruction from said user, including a choice of voice message to be sent to the calling device (T1),
said communication system being **characterized in that** said application server (AS) also includes means for processing said instruction that are executed only if said called device (T2) is already connected with a third-party device (T3) other than the calling device (T1), and **in that** said instruction also includes a duration indication intended to increase the duration of said voice message, enabling the duration of the "call waiting" service timer to be increased if necessary.

4. Computer program including instructions to implement the method according to Claim 1 or 2, if it is run on a computer.

## Patentansprüche

1. Datenübertragungsverfahren, das enthält:
- einen Schritt der Anforderung einer Verbindung einer anrufenden Vorrichtung (T1) mit einer angerufenen Vorrichtung (T2) und einen Schritt der Mitteilung (E2) der Anforderung an einen Benutzer der angerufenen Vorrichtung (T2),
- einen Schritt der Bestimmung eines Inhalts einer an die anrufende Vorrichtung (T1) zu übertragenden Nachricht abhängig von mindestens einer vom Benutzer der angerufenen Vorrichtung (T2) ausgegebenen Anweisung,
**dadurch gekennzeichnet, dass** der Bestimmungsschritt nur ausgeführt wird, wenn die angerufene Vorrichtung (T2) bereits mit einer Drittvorrichtung (T3) in Verbindung steht, die sich von der anrufenden Vorrichtung (T1) unterscheidet, und dass eine Anweisung eine Dauer-Angabe aufweist, die dazu bestimmt ist, die Dauer der zu übertragenden Nachricht zu inkrementieren, und dass es einen Schritt der Inkrementierung der Dauer einer Warteschleifen-Zeitschaltung der anrufenden Vorrichtung abhängig von der Dauer der zu übertragenden Nachricht enthält.

2. Datenübertragungsverfahren nach Anspruch 1, **dadurch gekennzeichnet, dass** die Anweisung über die angerufene Vorrichtung (T2) unter Verwendung eines Tons vom Typ DTMF übertragen wird.

3. Kommunikationssystem in einem Kommunikationsnetz (RES1), das einen Server (SM) von Sprachnachrichten und einen Anwendungsserver (AS) aufweist, wobei der Anwendungsserver (AS) aufweist:
- Einrichtungen zum Empfang einer Anrufaufbauanforderung entsprechend einem von einer ersten Kommunikationsvorrichtung (T1) an eine zweite Kommunikationseinrichtung (T2) eines Benutzers eingehenden Anruf,
- Einrichtungen zur Mitteilung des eingehenden Anrufs an den Benutzer,
- Einrichtungen zur Verbindung der ersten Kommunikationsvorrichtung (T1) mit dem Server (SM) von Sprachnachrichten, wobei der Server (SM) von Sprachnachrichten Einrichtungen zur Übertragung einer Sprachnachricht an die erste Kommunikationsvorrichtung (T1) aufweist,
- und Empfangseinrichtungen einer Anweisung des Benutzers, die eine Wahl einer an die anrufende Vorrichtung (T1) zu übertragenden Sprachnachricht aufweist,
wobei das Kommunikationssystem **dadurch gekennzeichnet ist, dass** der Anwendungsserver (AS) außerdem Einrichtungen zur Verarbeitung der Anweisung aufweist, die nur ausgeführt werden, wenn die angerufene Vorrichtung (T2) bereits mit einer Drittvorrichtung (T3) in Verbindung steht, die sich von der anrufenden Vorrichtung (T1) unterscheidet, und dass die Anweisung außerdem eine Dauer-Angabe aufweist, die dazu bestimmt ist, die Dauer der Sprachnachricht zu inkrementieren, was es ermöglicht, falls notwendig, die Dauer der Zeitschaltung des Diensts «call waiting» zu inkrementieren.

4. Computerprogramm, das Anweisungen aufweist, um das Verfahren nach Anspruch 1 oder 2 durchzuführen, wenn es in einem Computer ausgeführt wird.
